# EUROPEAN PATENT APPLICATION

(11) **EP 4 374 695 A1**
(43) Date of publication of application: **29.05.2024**
(21) Application number: 22209436.9
(22) Date of filing: 24.11.2022
(51) Int. Cl.: A01N 25/10, A01N 25/26, A01N 25/30, A01N 65/00, A01N 65/12, A01N 65/24, A01P 21/00

(54) **EDIBLE COATING FOR USE AS A PLANT BIOSTIMULANT**

(71) Applicant: AgroSustain SA, 1020 Renens (CH)
(72) Inventor: DUBEY, Olga, 1028 Préverenges (CH); DUBEY, Sylvain, 1028 Préverenges (CH); GUIGNARD, Florian, 1260 Nyon (CH); PELLAUD, Sébastien, 1941 Vollèges (CH); PEDRAZZETTI, Matteo, 1210 Lausanne (CH)
(74) Representative: AWA Switzerland

(57) **Abstract**

The invention relates to the field of natural biofilms for use as a plant biostimulant. In particular, Applicants surprisingly provided an edible coating composition in the form of an oil in water (O/W) emulsion and its use as a biostimulant for pre-harvest agricultural crops or cultivation plants selected from the list comprising cereals, fruits, vegetables, flowers, trees, grass and seeds.

## Description

### FIELD OF THE INVENTION

The invention relates to the field of natural biofilms for use as a plant biostimulant. In particular, Applicants surprisingly provided an edible coating composition in the form of an oil in water (O/W) emulsion and its use as a biostimulant for pre-harvest agricultural crops or cultivation plants selected from the list comprising cereals, fruits, vegetables, flowers, trees, grass and seeds.

### BACKGROUND OF THE INVENTION

Applicants, who has expertise in the development of agricultural technology, identified a need to enhance the harvest of certain agricultural crop, as well as the growth of ornamental plants, from a qualitative, quantitative and time-related point of view, considering that it is inevitable that agricultural crops of interest are subject to biotic and/or abiotic factors.

The qualitative point of view can be understood as the need to obtain better quality fruit, vegetables or grain, translated, for example, into the size of the fruit on the plants or the nutritional quality of the fruit or grain, resulting in a highly valuable agricultural commodity crop.

The quantitative point of view may be understood as more fruit, vegetables or grain produced, for example per hectare or, in other words, better yield of the agricultural crop. As well as improved control of the organism damaging the agricultural crop of interest.

The time-related point of view means a significant reduction in time to harvest, so rows can be closed early and the crop will flower earlier, in this way moving up the time to harvest the fruit or grain at its optimum point.

The economic point of view means obtaining optimized results from the harvest of a given agricultural crop from the qualitative, quantitative and time-related points of view, and should be considered the imperative desire from minimizing the economic risk to agricultural producers.

Biostimulant agents are usually applied to plants or in the rhizosphere to stimulate natural processes and in this way improve nutrient uptake, nutrient efficiency, tolerance to abiotic stress and plant quality.

From EP 2 735 232 A1, a biostimulant agent is known which, in addition to 79.3 to 83.4% hydrolyzed algal protein, also contains 2.0% to 2.1% betaine. However, this biostimulant shows little or no improved effect under stress conditions such as drought stress compared to a standard product. In EP 2 735 232 A1, selenium is therefore additionally added to the biostimulant mixture. This selenium addition can lead to an improvement in the response of the plants to drought stress, in particular to improved fruit production by the plants. However, the use of selenium is associated with a number of disadvantages. Although selenium is an essential trace element for humans in the smallest amounts, selenium has a toxic effect when ingested in excess of the necessary amount. This is problematic because plant treatment with the composition proposed in EP 2 735 232 A1 has been shown to significantly increase the selenium content in the edible portion of treated plants. Higher selenium concentrations also have a toxic effect on honeybees and other insects.

US 2022/274893 A1 (ALEXANDER ALVIN [DE]) discloses a biostimulant agent is useful for the treatment of plants and/or plant seed with a protein hydrolysate proportion and a betaine proportion in a mass ratio of 10: 1 to 1:10. A composition with a protein hydrolysate proportion and a betaine proportion in a mass ratio of 10: 1 to 1:10 can be provided as a biostimulant agent for the treatment of plants and/or plant seed.

The present invention aims to provide an improved easy-to-make edible coating for pre-harvest cultivation plants strictly made of food-grade compounds, which do not present one or more of the drawbacks of the state of the art methods and products.

It is therefore an object of the present invention to provide an improved biostimulant agent. In particular, it is an object of the present invention to provide a biostimulant agent with reduced toxicity.

### BRIEF DESCRIPTION OF THE INVENTION

In particular, the present invention aims to provide cost effective and robust natural biofilms for use as a biostimulant for pre-harvest cultivation plants or agricultural crops. It consists of a coating in the form of an oil in water microemulsion which is easy to apply on plants or seeds.

In the present invention, Applicants have surprisingly developed an edible coating composition for use as a biostimulant for pre-harvest cultivation plants selected from the list consisting of cereals, fruits, vegetables, flowers, trees, grass and seeds; the composition consisting of vegetable oils, water and a mixture of emulsifiers, being non-ionic sucrose fatty acid esters.

It is one object of the present invention to provide an use of an edible coating emulsion consisting in the combination of:
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of nonionic sucrose fatty acid ester emulsifiers consisting of sucrose monoester and sucrose polyester, wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water;
as a plant biostimulant for pre-harvest agricultural crops or cultivation plants selected from the list comprising cereals, fruits, vegetables, flowers, trees, grass and seeds.

It is another object of the invention to provide a method for treatment of pre-harvest cultivation plants and/or plant seeds, comprising the step of applying a biofilm of a biostimulant agent consisting in the combination of:
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of two nonionic sucrose fatty acid ester emulsifiers consisting of sucrose monoester and sucrose polyester,
wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water.

Other objects and advantages of the invention will become apparent to those skilled in the art from a review of the ensuing detailed description, which proceeds with reference to the following illustrative drawings, and the attendant claims.

### BRIEF DESCRIPTION OF THE FIGURES

**Figure 1****:** Represents differences in the number of leaves and shoots in strawberry plants that have been coated with our biostimulant compared to uncoated plants (control). The figure shows that coated plants growth faster (i.e. have more leaves and shoots throughout an experiment of 10 weeks.
**Figure 2****:** Represents differences in the total weight of in strawberry plants that have been coated with our biostimulant compared to uncoated plants (control) at the end of the experiment (week 10).
**Figure 3****:** Represents differences in the developmental stage of stolons that have been coated with our biostimulant compared to uncoated plants (control) at the end of the experiment (week 10). The figure shows that coated plants have more developed stolons that uncoated plants.
**Figure 4****:** Represents differences in biomass of shoots and roots of seedlings from lentils treated with our biostimulant compared to non-treated crops (control) after 4 weeks of experiment.
**Figure 5****:** Represents differences (i) in biomass of shoots and height of seedlings from spring wheat, (ii) biomass of shoots of rapeseed and (iii) biomass of shoots of linseed, treated with Appplicants' biostimulant compared to non-treated crops (control) after 4 weeks of experiment.
**Figure 6****:** Represents differences in height and biomass of shoots and roots of seedlings from buckwheat and lentil treated with our biostimulant compared to non-treated crops (control) after 4 weeks of experiment.
**Figure 7****:** Represents differences in yield between plants treated with Applicants' biostimulant compared to plants treated with a classical biotreatment (Kocide^{®} Opti and Thiovit Jet).
**Figure 8****:** Represents differences in growth between plants treated with our biostimulant compared to untreated plants one week after the 2nd cut simulating lawn mowing.
**Figure 9****:** Represents differences in growth (size of leaves) between coated versus non-coated banana trees.

### DETAILED DESCRIPTION OF THE INVENTION

Although methods and materials similar or equivalent to those described herein can be used in the practice or testing of the present invention, suitable methods and materials are described below. All publications, patent applications, patents, and other references mentioned herein are incorporated by reference in their entirety. The publications and applications discussed herein are provided solely for their disclosure prior to the filing date of the present application. Nothing herein is to be construed as an admission that the present invention is not entitled to antedate such publication by virtue of prior invention. In addition, the materials, methods, and examples are illustrative only and are not intended to be limiting.

In the case of conflict, the present specification, including definitions, will control.

Unless defined otherwise, all technical and scientific terms used herein have the same meaning as is commonly understood by one of skill in art to which the subject matter herein belongs. As used herein, the following definitions are supplied in order to facilitate the understanding of the present invention.

The term "comprise" is generally used in the sense of include, that is to say permitting the presence of one or more features or components.

Accordingly, a "consisting in or consisting of' claim format is typically understood by the case law to signal a closed claim that excludes any items not expressly recited in the claim.

As used in the specification and claims, the singular forms "a", "an" and "the" include plural references unless the context clearly dictates otherwise.

The presence of broadening words and phrases such as "one or more," "at least," "but not limited to" or other like phrases in some instances shall not be read to mean that the narrower case is intended or required in instances where such broadening phrases may be absent.

The terms « coating » and « biofilms » refer to a product and the results of a process of covering pre-harvest cultivation plants selected from the list consisting of cereals, fruits, vegetables, flowers, grass and seeds.

The term « oil» refers to the oil/butter extraction from the other fruits and/or seed contents such as solid material and liquid, but also include any other lipophilic and hydrophilic compounds from the plants that could end up in the oil/butter through the extraction process.

"Natural vegetable oils" or in general, natural oils are obtained from the most varied parts of oil-containing plants. Depending on the type of plant, different plant parts such as the seeds, fruits, leaves, flowers, stems, barks, woods (including their resins) or roots can be used for this purpose. The term "natural" is used to refer to a non synthetic material.

Natural vegetable oil include for example argan, avocado, canola, safflower, castor, coconut, grape seed, hazelnut, hemp seed, linseed, olive, palm, peanut, pumpkin seed, sesame, sunflower and walnutoil or mixtures thereof.

For the purpose of this invention "a plant" refers to a living organism of the kind exemplified by trees, shrubs, herbs, grasses, ferns, and mosses, typically growing in a permanent site, absorbing water and inorganic substances through its roots, and synthesizing nutrients in its leaves by photosynthesis using the green pigment chlorophyll. Plants include germinating seeds, saplings, emerging seedlings and established vegetation, including roots and sections above the soil such as leaves, stems, flowers, fruits, branches, members, roots and the like.

Low vegetations are members of the grass family, growing spontaneously or planted in fields and used as forage; also cultivated in gardens, parks, pastures and lawns. Lawn is a ground cover consisting of a superficial layer of grass and grass roots.

Plant of agricultural interest is any type of edible or inedible plant to be used for commercial consumption; these may be, trees, floral or non-floral plants, grasses, lawns and the like.

Fruit/grain for the purposes of the present application for invention, fruit or grain is considered to be the result of harvesting an agricultural crop.

The terms "vegetables" and "veggies" are used for a plant or part of a plant used as food, including such as e.g. some fruits, leaves, stems, roots and tubers.

A "seed" is an embryonic plant enclosed in a protective outer covering. The formation of the seed is part of the process of reproduction in seed plants, the spermatophytes, including the gymnosperm and angiosperm plants. Seeds are the product of the ripened ovule, after fertilization by pollen and some growth within the mother plant. The term "seed" also has a general meaning that antedates the above - anything that can be sown, e.g. "seed" potatoes, "seeds" of corn or sunflower "seeds". In the case of sunflower and corn "seeds", what is sown is the seed enclosed in a shell or husk, whereas the potato is a tuber.

Many structures commonly referred to as "seeds" are actually dry fruits. Plants producing berries are called baccate. Sunflower seeds are sometimes sold commercially while still enclosed within the hard wall of the fruit, which must be split open to reach the seed. Different groups of plants have other modifications, the so-called stone fruits (such as the peach) have a hardened fruit layer (the endocarp) fused to and surrounding the actual seed. Nuts are the one-seeded, hard-shelled fruit of some plants with an indehiscent seed, such as an acorn or hazelnut. Cofe beans and green cofe are also included within this terminology.

The terms "applying", "application", "treating", "treated", "administering", "administer", or "administered" relate to the application of the compositions disclosed herein to a seed, a seedling, a plant, or a plant part. The compositions may be applied to a seed, a seedling, a plant, or a plant part by spray application, drenching, watering/sprinkler systems, or soaking. For example, seeds can be soaked, sprayed, or washed with compositions as disclosed herein prior to packaging or planting.

The terms "about", "approximately", "approximate", and "around" are used in this patent application to describe some quantitative aspects of the invention. It should be understood that absolute accuracy is not required with respect to those aspects for the invention to operate. When these terms are used to describe a quantitative aspect of the invention the relevant aspect may be varied by up to ±10%. Thus, the terms "about", "approximately", "approximate", and "around" allow for variation of the various disclosed quantitative aspects of the invention by ±1%, ±2%, ±3%, ±4%, ±5%, ±6%, ±7%, ±8%, ±9%, or up to ±10%. For example, 10% plant extract can contain 9% to 11% of the plant extract.

As used herein the term "extract" refers to an active preparation derived from plant material. In the context of this specification, by "active" it is meant that the extract is capable of producing a desired effect as disclosed herein. An extract is obtained by a process of "extraction" which will be understood by those skilled in the art as a method for extracting the active principles. The extraction process may comprise treating plant material with a liquid, or a supercritical fluid to dissolve the active preparation and separate the same from residual unwanted plant material. An extract may be in liquid form (for example as a decoction, solution, infusion or tincture) or solid form (for example as a powder or granules).

Exemplary extraction processes include treatment with food-grade solvents including hexane, acetone, ethanol, water or mixture thereof, mechanical extraction by grounding the plants (e.g. vegetable oil), mixing with oil, then heating, stirring and press filtering, supercritical carbon dioxide extraction in multiple steps using pressurised hot water extraction with small amounts of ethanol, ultrasound-assisted methanol extraction and hydrodistillation and maceration with ethanol.

A "natural composition" or natural product is a chemical compound or substance produced by a living organism that is found in nature. In the broadest sense, natural products or composition include any substance produced by life. The term natural product has also been extended for commercial purposes to refer to cosmetics, dietary supplements, and foods produced from natural sources without added artificial ingredients.

Synergy: in general, synergy may be defined as a combination of two elements such that the result of the combination is larger than the sum of the individual results of each element.

Thus, synergy is nothing more than a sum of factors focused on the same purpose. A composition comprising "synergistic activity" or a "synergistic composition" is a combination of compounds which exhibits increased biological or functional activity as a non-linear multiple of the biological or functional activity of the individual compounds.

A blend is made up of two or more simple or compound substances. A blend may be solid or liquid, homogeneous or not.

Homogeneous blend: is a blend of substances whereby, as a result of the blend, the substances can no longer be identified in isolation, as they could at the start. The appearance of a homogeneous blend is uniform to the naked eye, blends are also single-phase.

"Biostimulants" are substances applied to plants to increase nutritional efficiency, increase resistance to stress due to abiotic factors, increase productivity and/or improve the quality of the commodity. According to Article 22 of the EU fertilizers regulation, a plant biostimulant shall be a fertilising product the function of which is to stimulate plant nutrition processes independently of the product's nutrient content with the sole aim of improving one or more of the following characteristics of the plant or the plant rhizosphere: (a) nutrient use efficiency, (b) tolerance to abiotic stress, (c) quality traits, or (d) availability of confined nutrients in the soil or rhizosphere. Article 23 on this regulation is making the distinction between fertilizer and plant protection products that from now on are in Regulation (EC) No 1107/2009 of the European Parliament and of the Council of 21 October 2009 concerning the placing of plant protection products on the market and repealing Council Directives 79/117/EEC and 91/414/EEC (OJ L 309, 24.11.2009, p. 1).

On the other end, a plant protection product (PPP) is defined in Article 2 Scope 1 of the EU 1107/2009 regulation. This EU Regulation shall apply to products, in the form in which they are supplied to the user, consisting of or containing active substances, safeners or synergists, and intended for one of the following uses: (a) protecting plants or plant products against all harmful organisms or preventing the action of such organisms, unless the main purpose of these products is considered to be for reasons of hygiene rather than for the protection of plants or plant products; (b) influencing the life processes of plants, such as substances influencing their growth, other than as a nutrient or a plant biostimulant; (c) preserving plant products, in so far as such substances or products are not subject to special Community provisions on preservatives; (d) destroying undesired plants or parts of plants, except algae unless the products are applied on soil or water to protect plants; (e) checking or preventing undesired growth of plants, except algae unless the products are applied on soil or water to protect plants. These products are referred to as "plant protection products" (PPP).

This Regulation shall apply to substances, including microorganisms having general or specific action against harmful organisms or on plants, parts of plants or plant products, referred to as "active substances".

Substances or preparations which are used or intended to be used in a plant protection product or adjuvant, but are neither active substances nor safeners or synergists, referred to as "co-formulants" .

"Abiotic factors" may be understood as the sum of all influences live beings in an ecosystem may receive from physical, chemical or physical-chemical aspects in the environment, such as light, solar radiation, temperature, time, water, soil composition and pressure, among others.

"Biotic factors" are the living parts of an ecosystem. Because of the way ecosystems work - as complex systems of competition and cooperation, where the action of every life form can effect all the others - any living thing within an ecosystem can be considered a biotic factor. Biotic factors such as soil bacteria, plant life, top predators, and polluters can all profoundly shape which organisms can live in an ecosystems and what survival strategies they use. Biotic factors are grouped by scientists into three major groups, which define their role in the flow of energy which all living things in the ecosystem need to survive. These groups are producers or autotrophs, consumers or heterotrophs, and decomposers or detritivores.

Biotic factors, together with non-living abiotic factors such as temperature, sunlight, geography, and chemistry, determine what ecosystems look like and what ecological niches are available.

There are two basic types of water and oil emulsions. Relatively low oil contents produce oil-in-water (O/W) emulsions while relatively low water contents produce water-in-oil (W/O) emulsions. In an oil-in-water emulsion, very fine droplets of oil are suspended in the water, while in a water-in-oil emulsion, water droplets are suspended in the oil. An emulsifying agent is a substance that is attracted to both the water and the oil. The emulsifying agent is thus attracted to the interfaces of the suspended droplets where it tends to sustain the emulsified state of the mixture.

The oil-in-water emulsion was preferred over a water-in-oil emulsion for two reasons: First, the oil-in-water emulsion yields a thinner and more easily applied coating material. Second, the oil-in-water emulsion is preferred in terms of its characteristics relative to preventing mold growth. Molds form and grow best in water that is deprived of air. In an oil-in-water emulsion, the water phase is exposed to air, while in a water-in-oil emulsion, which usually is a cream rather than a liquid, the suspended water droplets are sealed off by the surrounding oil body, thus providing an anaerobic environment for organisms that usually are found in the aqueous phase.

### Emulsifier:

An emulsifier is an additive which helps two liquids mix. For example, water and oil separate in a glass, but adding an emulsifier will help the liquids mix together. An emulsifier consists of a water-loving hydrophilic head and an oil-loving hydrophobic tail. The hydrophilic head is directed to the aqueous phase and the hydrophobic tail to the oil phase. The emulsifier positions itself at the oil/water or air/water interface and, by reducing the surface tension, has a stabilising effect on the emulsion. Emulsifiers belong to the surfactants, usually with a grease-loving (lipophilic) and a water-loving (hydrophilic) part, which can nest around boundary layers between aqueous and greasy parts. Grease and water repel each other, making an emulsion without emulsifier easily fall apart. An emulsifier prevents this rejection because it projects the water-loving side towards the water and the fat-loving side towards the fat. The extent to which the hydrophilic or lipophilic character dominates is represented by the HLB value of the surfactant (HLB = Hydrophilic-Lipophilic Balance). A high HLB value (10 to 18) indicates a hydrophilic substance suitable for emulsifying fats or oils in water. Substances with a low HLB (3 to 8) are lipophilic and suitable for water-in-oil emulsions.

An "ionic emulsifier" is one that has an electric charge (or more than one). There are three types of ionic surfactant:
▪ Anionic (negatively charged)
▪ Cationic (positively charged)
▪ Amphoteric (contains positive and negative charges)

"Nonionic emulsifiers" contain no charge. Structurally, nonionic emulsifiers combine uncharged hydrophilic and hydrophobic group that make them effective in wetting and spreading and as foaming agents.

### Sucrose Ester :

Sucrose ester emulsifiers are a class of synthetic emulsifiers that are obtained by chemically esterifying a sucrose molecule with one or more fatty acids (or glycerides).

Sucrose is a disaccharide consisting of a glucose and a fructose subunits bound together via an ether bond. It has the molecular formula C₁₁H₂₂O₁₁ and has the IUPAC name of β-D-Fructofuranosyl α-D-glucopyranoside. It possesses 8 hydroxyl group (-OH), which can be esterified as in the case of sucrose ester emulsifiers.

Fatty acids are molecules consisting of a carboxylic acid (-COOH) and an aliphatic chain, that can be either saturated (no carbon-carbon double bond in the chain) or unsaturated (one or more carbon-carbon double bond). In nature, the carbon chains usually have an even number of carbon ranging from 4 to 28. They also exist as esters, such as triglycerides or phospholipids, where the carboxylic acid has reacted with an alcohol to form an ester bond.

For sucrose ester emulsifiers, depending on the lengths of the fatty acid carbon chains (typically between C₁₂ and C₂₂) and on the number of fatty acid chains per sucrose molecules (mono-, di- and tri- esters mainly), a wide range of Hydrophilic-Lipophilic Balance between 2 and 18 can be covered. These molecules are approved and registered in the European Union by the European Food Safety Authority (EFSA) under the E number E473. They are typically produced by interesterification between sucrose and fatty acid methyl esters. As emulsifiers, they are used in cosmetics, pharmaceutical and food applications thanks to their broad emulsifying properties.

The "Hydrophilic-Lipophilic Balance" (HLB) is a value used to characterize the degree to which an emulsifier is hydrophilic or lipophilic, and ranges from 0 to 20. The lower the HLB value, the more hydrophobic the molecule is. For non-ionic emulsifiers, the method was first described by Griffin in 1949 for molecules like polyethylene oxide (PEO) (Griffin, William C. (1949), "Classification of Surface-Active Agents by 'HLB‴ (PDF), Journal of the Society of Cosmetic Chemists, 1 (5): 311-26*),* and has been adapted for sucrose esters.

The HLB of commercially available sucrose ester emulsifiers can be tuned by varying the degree of resterification or by changing the length of the carbon chain of the fatty acids. For a given carbon chain length, a monoester (one fatty acid ester per sucrose unit) is more hydrophilic than a diester (two fatty acid esters per sucrose molecule), while the triester (three fatty acid esters per sucrose molecule) is the most hydrophobic one.

"Sucrose monoesters" consist of a sucrose molecule with one fatty acid ester on it, while "sucrose polyesters" comprise all sucrose molecules having more than one fatty acid ester on it (including diesters, triesters, etc..).

Alternatively, for a given number of fatty acid esters per sucrose molecule, the longer the carbon chains of the fatty acid, the more hydrophobic (the lower the HLB) the sucrose ester emulsifier is.

However, even if these two ways of tuning the HLB exist, the degree of esterification has a more important impact on the HLB than the length of the fatty acid carbon chain. To prepare a hydrophobic sucrose ester, it is more efficient to reduce the weight percentage of sucrose monoester (versus the sucrose polyester) than shortening the length of the fatty acid carbon chain.

Sisterna^{®}, a company manufacturing and selling sucrose ester emulsifiers for cosmetic and food applications, has products with HLB ranging from 1 to 16. They use a mixture of stearic acid (C₁₈) and palmitic acid (C₁₆) for interesterification and tune the HLB of the final product by changing the percentage of monoester; the more monoester in the blend, the more hydrophilic it is (high HLB). Such products can be found at https://www.sisterna.com/food/product-range/

Another company, Mitsubishi Chemical Corporation^{®}, also sells similar products under the name Ryoto Sugar Ester^{®}. Differently from Sisterna^{®}, they use fatty acids of different chain length, and not the same mixture of palmitic/stearic acid. For example, they use lauric acid (C₁₂) or behenic acid (C₂₂). They also use fatty acids with unsaturated carbon chain such as oleic acid (C₁₈ - mono unsaturated) or erucic acid (C₂₂ - mono unsaturated). These products can be found at https://www.mfc.co.jp/english/ryoto_se/seihin.htm

It is one object of the present invention to provide the use of an edible coating emulsion consisting in the combination of:
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof; a mixture of two nonionic sucrose fatty acid ester emulsifiers consisting of sucrose monoester and sucrose polyester, wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of saidnonionic sucrose fatty acid ester emulsifiers which is comprised between 5 and 15;
and water;
as a plant biostimulant for pre-harvest agricultural crops selected from the list comprising cereals, fruits, vegetables, flowers, trees, grass and seeds.

Preferably the pre-harvest agricultural crop is a plant of agricultural interest being any type of edible or inedible plant to be used for commercial consumption; these may be, trees, floral or non-floral plants, grasses, lawns and the like as well as seeds, or fruit/grain which is the result of harvesting an agricultural crop as well as "vegetables" and "veggies" including such as e.g. some fruits, leaves, stems, roots and tubers.

Surprisingly, said plant biostimulant for pre-harvest agricultural crops or cultivation plants promotes: the sexual or non sexual reproduction; an improved stress resistence consisting of a cold stress, a heat stress, a drought stress, a salt stress; the plant growth wherein plant growth comprises increased yield, increased root length, increased leaf area, increased shoot growth, early maturation, and combinations thereof.

Preferably, said natural vegetable oils are cold pressed oils which are selected from the group consisting of argan, avocado, canola, safflower, castor, coconut, grape seed, hazelnut, hemp seed, linseed, olive, palm, peanut, pumpkin seed, sesame, sunflower and walnut or mixtures thereof.

More preferably, said natural vegetable oils correspond to a mixture of two natural vegetable oils selected from the group consisting of canola, olive and sunflower.

Natural vegetable oils have been used in the present invention because it is important that the coating be edible, however it is also possible to use mineral oils instead. It has been demonstrated that these mineral oils, tested under the same conditions, also give good results on pre-harvest agricultural crops, nevertheless the fact that the coating according to the invention is edible is an important demand from the consumer.

Mineral oils are usually obtained as by-products of crude oil refining for making gasoline or petroleum. They are mainly composed of alkanes, cycloalkanes and naphtalenes (polycyclic hydrocarbons). They are less dense and viscous than the edile oils. Antioxidants are not present in mineral oils but are usually added afterwards.

According to one embodiment of the invention, the percentage of sucrose monoester versus sucrose polyester is 60% in total weight of said sucrose fatty acid ester emulsifiers corresponding to a final hydrophilic-lipophilic balance (HLB) of 13.

According to another embodiment of the invention, the percentage of sucrose monoester versus sucrose polyester is 25% in total weight of said sucrose fatty acid ester emulsifiers corresponding to a final hydrophilic-lipophilic balance (HLB) of 5.

According to another embodiment, the nonionic sucrose fatty acid ester emulsifiers represent between 7% w/w and 15% w/w of the total weight of the edible coating emulsion before dilution. Preferably, the nonionic sucrose fatty acid ester emulsifiers represent around 10 % w/w or around 13% w/w of the total weight of the edible coating emulsion before any dilution.

The edible coating emulsion of the invention comprises mixture of nonionic sucrose fatty acid ester emulsifiers having different hydrophilic-lipophilic balances. As explained above, hydrophilic-lipophilic balances are given by the HLB and the HLB of commercially available sucrose ester emulsifiers can be tuned by varying the degree of interesterification or by changing the length of the carbon chain of the fatty acids.

Preferably, said nonionic sucrose fatty acid ester emulsifiers having different hydrophilic-lipophilic balances are selected from the list comprising the sucrose monostearate and di or tri or polystearatealpha D-Glucopyranoside, beta-D-fructofuranosyl, mixed palmitates and stearates i.e. SP70 and SP30. According to one embodiment the mixture corresponds to two nonionic sucrose fatty acid ester emulsifiers. Preferably, said two nonionic sucrose fatty acid ester emulsifiers are mixed palmitates and stearates SP70 and SP30.

According to another preferred embodiment of the invention, said nonionic sucrose fatty acid ester emulsifiers are selected from the list comprising the sucrose (alpha-D-Glucopyranoside, beta-D-fructofuranosyl) monostearate and di or tri or polystearate, and sucrose (alpha-D-Glucopyranoside, beta-D-fructofuranosyl) palmitate and di or tri ot polypalmitates. Preferably, said nonionic sucrose fatty acid ester emulsifier is HABO MX T050 (https://www.compassfoods.com/habo-sucrose-esters.html).

According to a preferred embodiment of the invention, the edible coating emulsion is a microemulsion having an average particle size distribution of the oil droplets in the coating emulsion of around 20 micrometer in diameter, and preferably between 2 and 5 micrometer in diameter.

Preferably, the natural vegetable oil represents between 6 % w/w and 12% w/w of the total weight of the edible coating emulsion before dilution. Most preferably, the natural vegetable oil represents around 9% of the total weight of the edible coating emulsion before any dilution.

Additionally, one can also add to the edible coating emulsion of the invention common adjuvants used in agriculture. An adjuvant is a chemical or mixture of chemicals that enhances the efficacy of a biostimulant product. These adjuvants include, but are not limited to, stickers (for example such as Sticman ^{®} : https://www.agrileader.fr/adjuvants/1148-0377200-sticman.html), spreaders (for example such as SilwetTM L-77: https://www.momentive.com/en-us/categories/agriculture/silwet-l-77-ag-spray-adjuvant), anti-foaming agents (for example such as Abate ^{®}: https://www.interagro.co.uk/product/abate/) and wetting agents (for example such as Presto ^{®} :https://www.cerience.fr/en/solutions/presto). Possibly, one can also add to the edible coating emulsion of the invention preservative agents such as citric acid, benzoic acid or sorbic acid.

Advantageously, a natural fungicide or a formulation containing a natural fungicide can be added or combined to the edible coating emulsion of the invention. This could for example be algae and cyanobacterial extracts.

Preferably the natural fungicide is an isothiocyanate derivative as described in WO2020011750 (A1) (UNIV DE LAUSANNE [CH]).

Other non natural fungicides may also be used such as the fungicides selected from the group comprising: azoxystrobin, cyproconazole, mandipropamide, zoxamide, copper oxysulfate, cymoxanil, fenpropidine, difenoconazole, propiconazole, captan, cyprodinil, copper oxychlorure, aluminium fosetyl, folpet, dithianon, potassium phosphate, mancozeb, cyflufenamide, difenoconazole, benzovindiflupyr, prothioconazole, metalaxyl, fluazinam, boscalid, tebuconazole, bupirimate, epoxiconazole, fenpropimorph, fluxapyroxad, fludioxonil, trifloxystrobine, sulfur metrafenone, hydrogen peroxide, peroxyacetic acid, chlorothalonil, iprodione, liquid hydrocarbons, flutolanil, propamocarb monohydrochloride, pyrimethanil, Dodine, Copper octanoate, triadimenol, cupric hydroxide, thiabendazole, Epoxyconazol, Prochloraze, thiophanate-methyl, triflumizole, mancozebe, picoxystrobine, fenbuconazole, myclobutanil, quinoxyfene, famoxadone, metiram, potassium phosphite, flutriafol, bixafen, kresoxim-methyl, Fluoxastrobin, Thiophanate methyl, Ziram, Polyoxin-D zinc salt, Chlorothalonil, Triphenyltin hydroxide, ethaboxam, mandestrobin, clothianidin, pconazole, proquinazide, strobilurin and triazole, triforine, thiram, cyazofamid, isofetamide, nuarimol, spiroxamine, propamocarbe, epoxiconazole, ametoctradine, dimethomorph, fenpyrazamine, xemium, penthiopyrad.

The coating i.e. plant biostimulant of the invention can also form an inert physical barrier on plants against fungal pathogens and hence slow down their development by preventing them to access the resources of the plants required for their growth and this without the presence of any fungitoxic compounds being present in the coating. In this particular embodiment, the coating of the invention can be eligible as a plant protection product (PPP).

It is yet another object of the invention to provide a plant biostimulant in the form of an oil in water (O/W) emulsion comprising the combination of:
natural or non-synthetic vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of two nonionic sucrose fatty acid ester emulsifiers consisting of sucrose monoester and sucrose polyester,
wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water;

Preferably the plant is a plant of agricultural interest being any type of edible or inedible plant to be used for commercial consumption; these may be, trees, floral or non-floral plants, grasses, lawns and the like as well as seeds, or fruit/grain which is the result of harvesting an agricultural crop as well as "vegetables" and "veggies" including such as e.g. some fruits, leaves, stems, roots and tubers.

Preferably, said natural vegetable oils are cold pressed oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof.

More preferably, said natural vegetable oils correspond to a mixture of two natural vegetable oils selected from the group consisting of canola, olive and sunflower.

According to one embodiment of the invention, the percentage of sucrose monoester versus sucrose polyester is 60% in total weight of said two sucrose fatty acid ester emulsifiers corresponding to a final hydrophilic-lipophilic balance (HLB) of 13.

According to another embodiment of the invention, the percentage of sucrose monoester versus sucrose polyester is 25% in total weight of said sucrose fatty acid ester emulsifiers corresponding to a final hydrophilic-lipophilic balance (HLB) of 5.

According to yet another embodiment, the nonionic sucrose fatty acid ester emulsifiers represent between 7% w/w and 15% w/w of the total weight of the edible coating emulsion before dilution. Preferably, the nonionic sucrose fatty acid ester emulsifiers represent around 10 % w/w or around 13% w/w of the total weight of the edible coating emulsion before any dilution.

According to an embodiment, the edible coating emulsion namely the plant biostimulant of the invention comprises two nonionic sucrose fatty acid ester emulsifiers having different lipophilic balances.

Preferably, said two nonionic sucrose fatty acid ester emulsifiers having different lipophilic balances are selected from the list comprising the sucrose monostearate and di or tri or polystearate alpha-D-Glucopyranoside, beta-D-fructofuranosyl, mixed palmitates and stearates i.e. SP70 and SP30. Preferably, said two nonionic sucrose fatty acid ester emulsifiers are mixed palmitates and stearates SP70 and SP30.

According to another preferred embodiment of the invention, said nonionic sucrose fatty acid ester emulsifiers are selected from the list comprising the sucrose (alpha-D-Glucopyranoside, beta-D-fructofuranosyl) monostearate and di or tri or polystearate, and sucrose (alpha-D-Glucopyranoside, beta-D-fructofuranosyl) palmitate and di or tri ot polypalmitates. Preferably, said nonionic sucrose fatty acid ester emulsifier is HABO MX T050.

Advantageously, the plant biostimulant is a microemulsion having an average particle size distribution of the oil droplets in the coating emulsion of around 20 micrometer in diameter, and preferably between 2 and 5 micrometer in diameter.

Preferably, the natural vegetable oil represents between 6% and 12% w/w of the total weight of the edible coating emulsion before dilution. Most preferably, the natural vegetable oil represents around 9% of the total weight of the edible coating emulsion before any dilution.

According to a preferred embodiment, a natural fungicide as exemplified above can be added or combined to the edible coating emulsion of the invention.

Additionally, one can also add to the edible coating emulsion of the invention common adjuvants used in agriculture. An adjuvant is a chemical or mixture of chemicals that enhances the efficacy of a biostimulant product. These adjuvants include, but are not limited to, stickers (for example such as Sticman ^{®} : https://www.agrileader.fr/adjuvants/1148-0377200-sticman.html), spreaders (for example such as SilwetTM L-77: https://www.momentive.com/en-us/categories/agriculture/silwet-l-77-ag-spray-adjuvant), anti-foaming agents (for example such as Abate ^{®}: https://www.interagro.co.uk/product/abate/) and wetting agents (for example such as Presto ^{®} :https://www.cerience.fr/en/solutions/presto). Possibly, one can also add to the edible coating emulsion of the invention preservative agents such as citric acid, benzoic acid or sorbic acid.

It is yet another object of the present invention to provide a method for treatment of pre-harvest cultivation plants and/or plant seeds, comprising the step of applying a biofilm of a biostimulant agent consisting in the combination of:
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of two nonionic sucrose fatty acid ester emulsifiers consisting of sucrose monoester and sucrose polyester,
wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water.

According to an embodiment of the invention, the treatment comprises contacting at least one part of the pre-harvest cultivation plants and/or the plant seeds with the plant biostimulant agent.

Advantageously, the pre-harvest cultivation plants and/or plant seed are brought into contact with the plant biostimulant agent for at least 10 hours and/or for at most 14 hours.

According to another embodiment, the treatment is performed before a stress event for the pre-harvest cultivation plants and/or plant seed. Preferably the stress event is a cold stress, a heat stress, a drought stress, a salt stress, and/or a herbicide, fungicide, and/or insecticide treatment.

According to yet another embodiment, the the treatment is performed at least 24 hours and at most 48 hours before the stress event.

Preferably, the treatment with the plant biostimulant agent promotes the sexual or non sexual reproduction; an improved stress resistence consisting of a cold stress, a heat stress, a drought stress, a salt stress; the plant growth wherein plant growth can be increased yield, increased root length, increased leaf area, increased shoot growth, early maturation, and combinations thereof, compared to a plant that did not receive the agriculturally effective amount of the plant biostimulant agent.

According to other embodiments, the treatment with the biostimulant of the invention is adapted to:
- increase a plant biomass in the plant, wherein the plant biomass comprises root mass, shoot mass, total plant mass, root length, shoot length, stem diameter, wet weight, or any combination thereof;
- increase a nutrient uptake in the plant compared to a plant that did not receive the agriculturally effective amount of the composition, wherein there is an increased nutrient uptake of nickel, copper, zinc, manganese, iron, molybdenum, boron, calcium, sulfur, phosphorus, magnesium, calcium, potassium, nitrogen, carbon, or a combination thereof.

According to one embodiment of the invention, the obtained mixtures namely the plant biostimulant of the invention are diluted from 2% to 20% in weight in water (i.e. this corresponds to a final product diluted between 5 and 50 times) to prepare a ready for spray or ready for bath edible coating composition in the form of an oil in water (O/W) emulsion.

The coating emulsion i.e. biostimulant agent as described above, can be applied by several techniques, preferably by spraying or immersion in a bath. When the coating emulsion used has a high viscosity, preferably a dilution of the emulsion is used for applying the emulsion, whereas with an emulsion with a low viscosity, preferably a spraying/immersion technique is used. The coating is allowed or made to dry after being applied.

In case of a concentrated composition with low water content, the composition is diluted prior to use.

The preparation method may result in a thickness of the coating of 5-20 micrometers. This can be achieved in a single coating step, for instance by immersion or spraying.

It is also possible to apply multiple coating steps, for instance in two steps. In this case the first coating step results in a primer layer and the second step in a "finishing" layer. For the sake of efficiency it is however preferred that coating is performed in a single step .

The emulsion of the coating composition according to the invention may be applied one or more times directly on the plant items. Preferably the emulsion is applied once.

The emulsion of the coating composition according to the invention is applied directly on the pre-harvest plants and is edible.

According to an embodiment, the invention relates to a method for treating plants and/or plant seed, wherein the treatment is performed with the biostimulant agent according to the invention.

In a preferred embodiment of the method, the treatment comprises contacting at least a part of the plants and/or plant seed with the biostimulant agent. Preferably, the plant part comprises one or more leaves of the plant. In particular, the biostimulant agent can be applied to the plant part and/or the plant seed by means of a spraying method, for example in the form of a solution, an aerosol, and/or as a gas mixture.

In the case of the treatment of plant seed, these are preferably placed into the biostimulant agent and/or washed around by it before the sowing process. For this purpose, the biostimulant agent may once again be present in the form of a solution, an aerosol, preferably in the form of a nebula, and/or as a gas mixture. In a preferred method embodiment, the plant seed is incubated in an aerated aqueous solution with a concentration of the diluted biostimulant agent between 2 weight percent and 20 weight percent. In this way, a particularly effective germination promotion of the seed is achieved under stress conditions such as cold stress.

In a further preferred embodiment of the method according to the invention, it is provided that the plants and/or the plant seed are brought into contact with the biostimulant mixture for at least 10 hours and/or for at most 14 hours. It has been found that at these contact durations with the biostimulant mixture, the greatest improvements are achieved with regard to the stress resistance of the plants and/or the plant seed.

An advantageous effect of the biostimulant mixture is of course also achieved with shorter or longer contact times. In certain method embodiments, the plants and/or plant seed are brought into contact with the biostimulant mixture for at least 1 hour, at least 2 hours, at least 3 hours, at least 4 hours, at least 5 hours, at least 6 hours, at least 7 hours, at least 8 hours, at least 9 hours, at least 10 hours, at least 11 hours, at least 12 hours, at least 13 hours, at least 14 hours, at least 15 hours, at least 16 hours, at least 17 hours, at least 18 hours, at least 19 hours, at least 20 hours, at least 24 hours, at least 36 hours, at least 48 hours or at least 72 hours.

Additionally or alternatively, the plants and/or plant seed may be brought into contact with the biostimulant mixture for at most 1 hour, at most 2 hours, at most 3 hours, at most 4 hours, at most 5 hours, at most 6 hours, at most 7 hours, at most 8 hours, at most 9 hours, at most 10 hours, at most 11 hours, at most 12 hours, at most 13 hours, at most 14 hours, at most 15 hours, at most 16 hours, at most 17 hours, at most 18 hours, at most 19 hours, at most 20 hours, at most 24 hours, at most 36 hours, at most 48 hours or at most 72 hours.

In preferred embodiments of the method, it is provided that the treatment with the biostimulant is performed before a stress event for the plants and/or the plant seed. In this way, the stimulant function is caused to develop effect at least partially or completely by the time the stress event occurs, and a reliable improvement in stress resistance is ensured. In other words, the plants or the plant seed are thus prepared for a planned and/or expected stress event by already improving the stress resistance in advance of the stress event by the treatment with the biostimulant agent according to the invention. In addition or as an alternative to the treatment before a stress event, the treatment with the biostimulant agent can also be performed after a stress event for the plants and/or the plant seeds. Surprisingly, it has been found that even those plants that have already been damaged by a stress event can be largely revitalized again by treatment with the biostimulant agent according to the invention. In this way, crop losses can be significantly reduced even, for example, after an unforeseen heat or drought period.

The inventors have found that the method according to the invention is suitable for enhancing plant growth and improving the tolerance of plants or plant seed to a wide variety of stress events. In particular, the stress event may be a cold stress, a heat stress, a drought stress, and/or a salt stress. In particular, a cold stress may involve exposing the plants or plant seed to a temperature below 10° C or below 8° C for several successive days. In particular, subtropical and tropical plants may be exposed to cold stress even at temperatures below 10° C. In the case of heat stress, for example, plants are exposed to temperatures above 30° C for several successive days. In general, plants are exposed to drought stress if they have too insufficient water available. Reasons for this can be soil drought, soil frost, osmotic water retention, or insufficient expansion of the root system. An example of drought stress is soil moisture less than 50% or less than 30% of the usable field capacity (%nFK).

The stress event can also be an herbicide, fungicide, and/or insecticide treatment, which are also typically associated with stress to the plant. In particular, herbicide applications sometimes cause significant stress to the useful plant, such that even selective herbicides can reduce productivity of the plants. For example, even the application of selective sugar beet herbicides usually leads to a significant reduction in sugar yield. The method according to the invention effectively and reliably counteracts these stress effects due to sufficient amount of internal resources that permit to extend the crop life while waiting for growers to identify the right treatment for the present biotic stresses.

In this context, the herbicide, fungicide and/or insecticide treatment are examples of a plannable stress event. An expected stress event can be predicted, for example, using weather data, in particular with the aid of precipitation and/or temperature forecasts. The respective parameters characterizing a stress event, such as temperature patterns, the water retention capacity and/or salt concentration of the soil, precipitation patterns, air humidity patterns and the like are sufficiently known to the skilled person for the respective plant species or plant varieties, respectively.

In preferred embodiments of the method according to the invention, the treatment is performed between 24 and 48 hours before the stress event. This is advantageous because it provides sufficient time for the uptake and metabolism of the biostimulant agent by the plants or plant seed and accordingly leads to a particularly pronounced and reliable improvement in stress resistance.

In further advantageous method embodiments, the treatment is performed at least 1 hour, at least 2 hours, at least 3 hours, at least 4 hours, at least 5 hours, at least 6 hours, at least 7 hours, at least 8 hours, at least 9 hours, at least 10 hours, at least li hours, at least 12 hours, at least 13 hours, at least 14 hours, at least 15 hours, at least 16 hours, at least 17 hours, at least 10 hours, at least 19 hours, at least 20 hours, at least 24 hours, at least 36 hours, at least 48 hours, or at least 72 hours before and/or after the stress event.

In addition or alternatively, the treatment may be performed at most 1 hour, at most 2 hours, at most 3 hours, at most 4 hours, at most 5 hours, at most 6 hours, at most 7 hours, at most 8 hours, at most 9 hours, at most 10 hours, at most 11 hours, at most 12 hours, at most 13 hours, at most 14 hours, at most 15 hours, at most 16 hours, at most 17 hours, at most 18 hours, at most 19 hours, at most 20 hours, at most 24 hours, at most 36 hours, at most 48 hours, or at most 72 hours before and/or after the stress event.

The method according to the invention can in principle be used in the treatment of all known plant species or plant varieties and/or their plant seeds, for example, in the case of arable plants, garden plants, ornamental plants, grasses, trees, shrubs and/or lawns. Preferably, the method according to the invention comprises the treatment of one or more of the following plant species or plant varieties respectively and/or their plant seed: cereals, corn, wheat, barley, rye, rice, sunflowers, oil plants, canola, soybeans, cotton plants, potatoes, fruits, vegetables, beans, broccoli, cabbage, carrots, cauliflower, cucumbers, eggplants, lettuce, melons, watermelons, onions, peas, spice plants, herbs, pepper, spinach, tomatoes and/or tea.

It goes without saying that the method according to the invention and/or the biostimulant agent according to the invention can in principle be used to treat a single plant. Such applications are particularly intended in the field of ornamental plants. Preferably, however, the method and/or the biostimulant agent is applied to a large number of plants and is used in particular on a large agricultural scale.

Those skilled in the art will appreciate that the invention described herein is susceptible to variations and modifications other than those specifically described. It is to be understood that the invention includes all such variations and modifications without departing from the spirit or essential characteristics thereof. The invention also includes all of the steps, features, compositions and compounds referred to or indicated in this specification, individually or collectively, and any and all combinations or any two or more of said steps or features. The present disclosure is therefore to be considered as in all aspects illustrated and not restrictive, the scope of the invention being indicated by the appended Claims, and all changes which come within the meaning and range of equivalency are intended to be embraced therein.

The foregoing description will be more fully understood with reference to the following Examples. Such Examples, are, however, exemplary of methods of practising the present invention and are not intended to limit the scope of the invention.

### Example 1:

Applicants developed coatings to be used as a biostimulant of pre-harvest cultivation plants. If not stated otherwise, the preparation of the emulsion was done on a Kenwood Cooking Chef Gourmet KC9040S robot, with the K-Haken stirrer.

### 1a Emulsion preparation with Sisterna Sucrose Ester Emulsifiers SP30 and SP70

The water phase was prepared by mixing 367 g of MilliQ water with 35g of SP70 sucrose ester emulsifier and 10g of SP30 sucrose ester emulsifier and heating this solution to 80°C with the stirring speed set on level 1.

40g of vegetable oils containing a 50/50 w/w% mixture of sunflower and canola oil was heated to 75°C on an IKA Basic heating plate, with a stirring speed of 300 rpm. The oil was then added to the water phase. The emulsion was kept at 80°C for 25 minutes, with a stirring speed set on minimum speed. At the end of the emulsification, a cooking mixer was used for 2 minutes to generate the final emulsion. The heating was then stopped, and the emulsion was cooled down to room temperature with the stirring on. The cooking mixer was used two more times for 2 minutes during the cooling process to ensure a homogeneous emulsion. Preparations are summarized in **Table 1.**

### 1b Emulsion preparation with CompassFood Sucrose Ester Emulsifier Habo MX

The water phase was prepared by mixing 367 g of MilliQ water with 45g of HABO MX T050 sucrose ester emulsifier and heating this solution to 80°C with the stirring speed set on level 1. 40g of vegetable oils containing a 50/50 w/w% mixture of sunflower and canola oil was heated to 75°C on an IKA Basic heating plate, with a stirring speed of 300 rpm. The oil was then added to the water phase. The emulsion was kept at 80°C for 25 minutes, with a stirring speed set on minimum speed. At the end of the emulsification, a cooking mixer was used for 2 minutes to generate the final emulsion. The heating was then stopped, and the emulsion was cooled down to room temperature with the stirring on. The cooking mixer was used two more times for 2 minutes during the cooling process to ensure a homogeneous emulsion. Preparations are summarized in **Table 1.**

### 1c Final emulsion dilution and application

The stock emulsion was further diluted with MilliQ water to 2% , 5%, 10% or 15 wt% (e.g. 15g of the stock emulsion + 85g of MilliQ water to get a 15% emulsion). This diluted emulsion was transferred into a sprayer or a bath for the application on the plant.

**Table 1**

| **NAME** | **Emulsifier 1** | | **Emulsifier 2** | | **Oil** | |
|---|---|---|---|---|---|---|
| | Type | Amount [g] | Type | Amount [g] | Type | Amount [g] |
| Sisterna | SP70 | 35 | SP30 | 10 | Canola/Sunflower 50/50 w/w | 40 |
| CompassFood | HABO MX T050 | 45 | NA | NA | Canola/Sunflower 50/50 w/w | 40 |

### Example 2:

Applicants' biostimulant was diluted at a concentration of 5% and then sprayed on strawberry seedling (6 plants), kept in standard conditions in a greenhouse, once a week for a total of 10 weeks. From week 0 to week 10, the number of leaves and shoots of coated plants were measured and compared to control plants (6 uncoated plants sprayed with water once a week). At the end of the experiment (week 10), the total weight of roots was recorded as well as the developmental stages of stolons of each plant. These stages were divided in 8 categories (cat. 1: starting of one stolon; cat. 2: one stolon + one attached seedling; cat.3: one seedling + starting of a second seedling; cat.4: two seedling + starting of a third seedling; cat.5: three seedling + starting of the first ramification [stolon starting from a seedling]; cat.6: three seedling + a ramification and a seedling starting from it; cat.7: three seedling + two ramifications + 1 seedling on the first ramification + starting of a seedling on a second ramification; cat.8: 4 seedling + three ramifications + two seedling on the first ramification + 1 seedling on the second ramification).

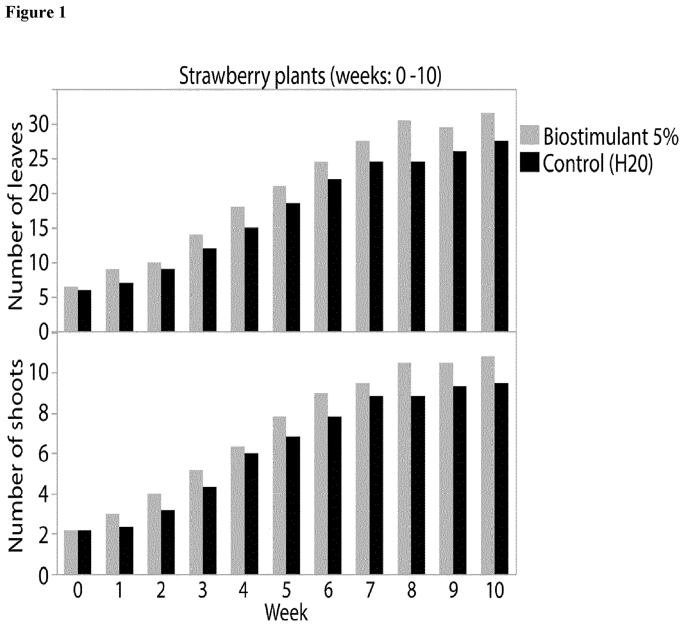

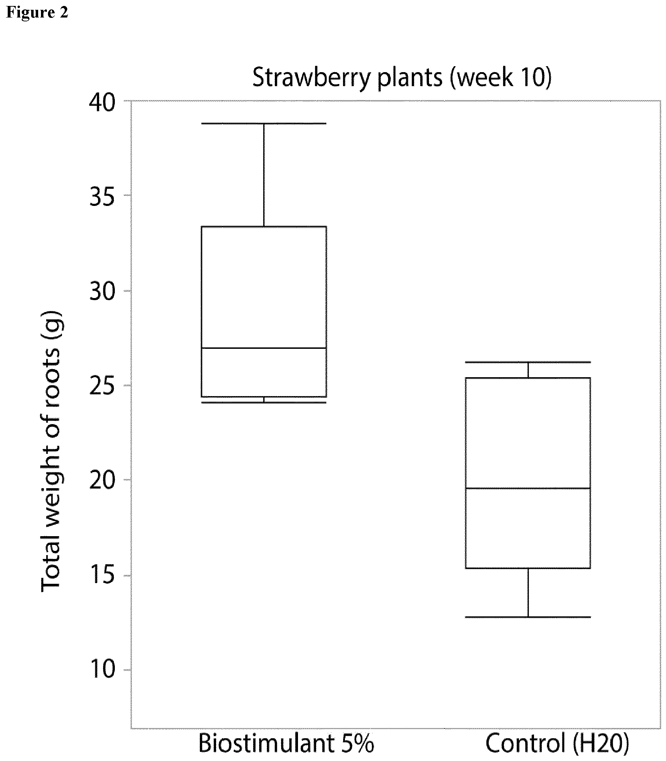

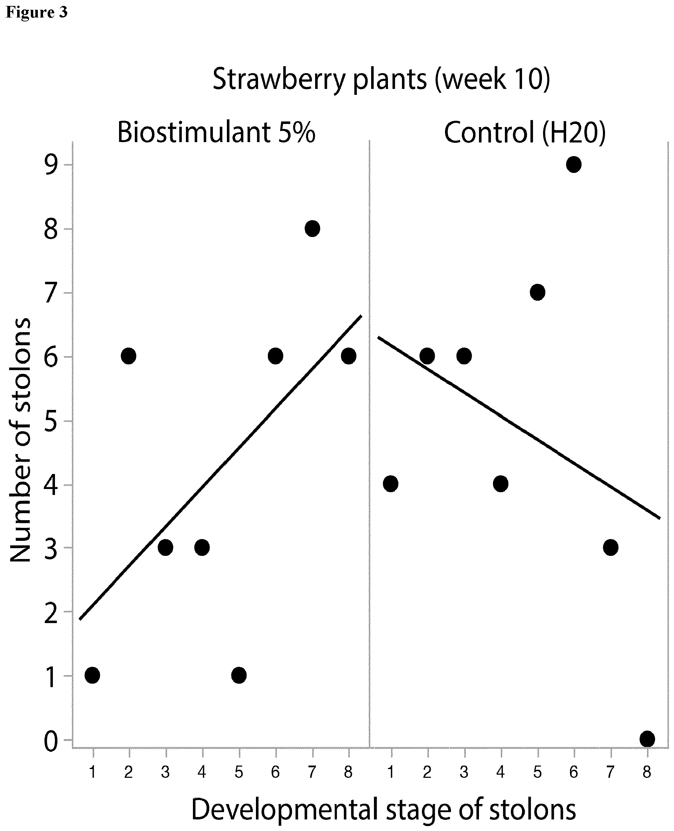

**Conclusion:** Applicants highlighted that their biostimulant is promoting the growth of strawberry plants through the analyses of several parameters. In more details, **Figure 1** shows that the number of leaves and shoots in strawberry plants that have been coated is constantly higher than the ones of uncoated plants (control) throughout the 10 weeks of the experiment. **Figure 2** shows that the root biomass is also higher in coated versus uncoated plants at the end of the experiment (week 10). Finally, we highlight that the vegetative reproductive system (stolons) are developing faster in coated versus uncoated plants (see **Figure 3**).

### Example 3:

Applicants' biostimulant was tested on 4 different agronomically important crop species (spring wheat, rapeseed, green lentil and linseed) in normal conditions (i.e. no water stress). Seeds were sown in seed trays and placed in climatic chambers with a 12h 25°C day/12h 23°C night cycle with constant humidity (45%). The plants were watered by adding water from the bottom of the trays. After one week, the plants were sprayed with 15% (w/w) coating or water (control). This treatment was repeated every week to cover the newly produced leaves. The height of the plants and the number and/or size of leaves were assessed every week, starting one week after the first treatment. After one month, plants were harvested. Root biomass and shoot biomass were measured.

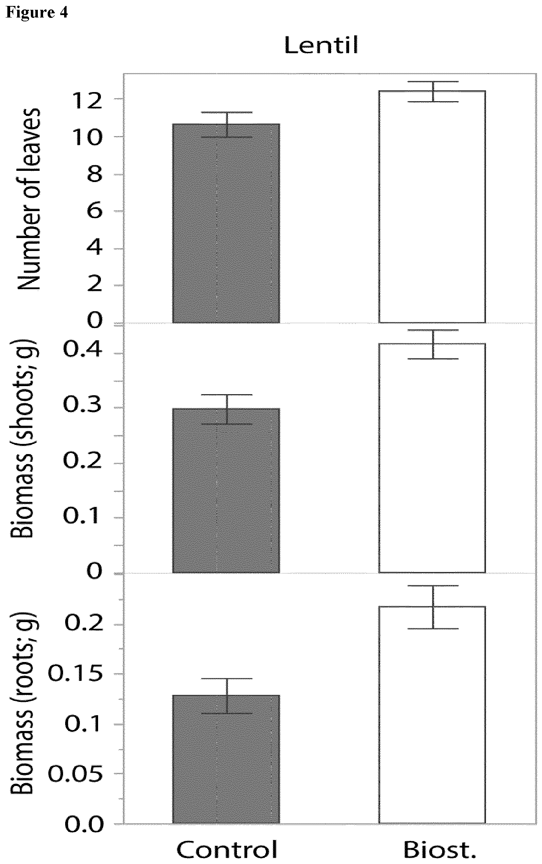

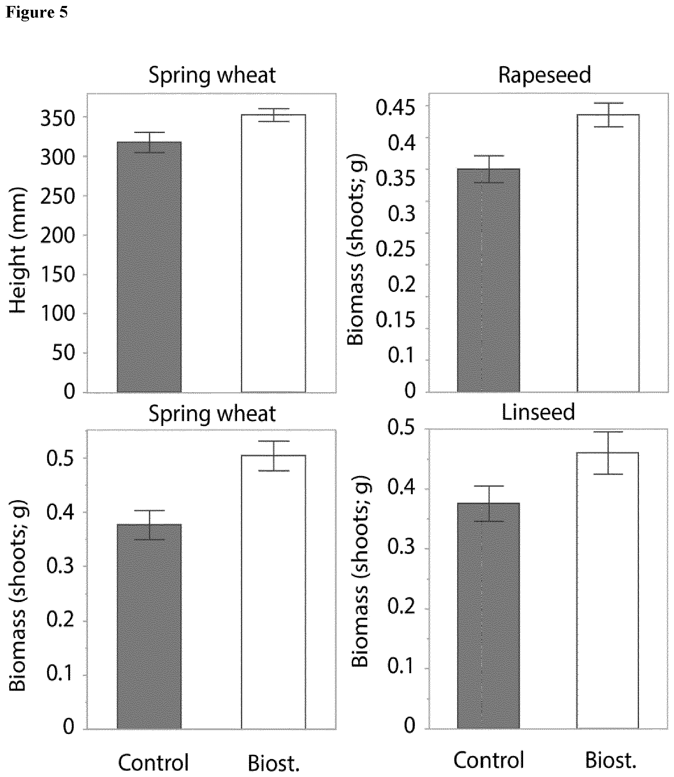

**Conclusion:** Applicants highlighted that the seedling of lentils coated with our biostimulant exhibited higher biomass (for shoots and roots) and more leaves than non-coated seedlings (**Figure 4**). Concerning spring wheat biomass (shoots) and height of coated seedling were higher than in non-coated seedlings (**Figure 5**). Finally, for rapeseed and linseed seedlings, they both exhibited higher biomass of shoots when coated **(****Figure 5**).

### Example 4:

Applicants' biostimulant was tested on 2 different agronomically important crop species (buckwheat and lentil) under water stress. Seeds were sown in seed trays and placed in climatic chambers with a 12h 25°C day/12h 23°C night cycle with constant humidity (45%). The plants were watered by adding water from the bottom of the trays. Drought stress condition was applied after 1 week (after germination) by giving the plants a reduced amount of water. After one week, the plants were sprayed with 15% (w/w) coating or water (control). This treatment was repeated every week to cover the newly produced leaves. The height of the plants and the number and/or size of leaves were assessed every week, starting one week after the first treatment. After one month, plants were harvested. Root biomass and shoot biomass were measured.

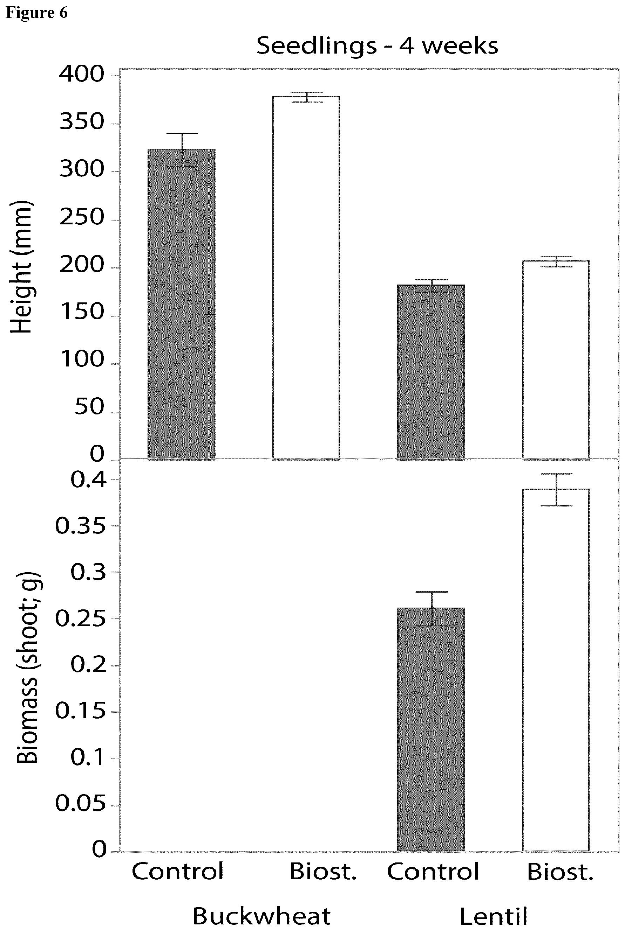

**Conclusion:** Applicants highlighted that both species of coated seedlings exhibited higher height under water stress at the end of the experiment (4 weeks) compared to non-coated seedlings (control). Shoot biomass was also higher in coated lentils compared to non-coated ones (**Figure 6**).

### Example 5:

A total of eight treatments was performed with Applicants' biostimulant on grapevines (variety: Chasselas) in the field (Nyon; western Switzerland) from May to August 2022 (first three treatments: concentration of 15%, then five treatments at 7%). Tests were performed on 40 plants distributed in 4 parcels. Grapevine yield (weight/vine) was then compared to a classical biotreatment performed on 40 plants distributed in 4 parcels. Eight treatments with the following pesticides Kocide^{®} Opti (Bayer) and Thiovit Jet (Syngenta) were applied on these plants from May to August 2022.

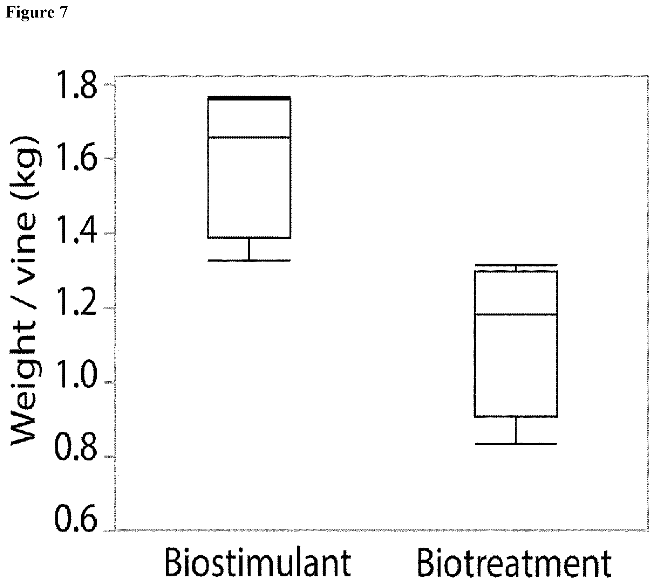

**Conclusion:** Applicants highlighted that plants treated with their biostimulant exhibited a higher yield (weight/vine) than plants treated with a biotreatment (**Figure 7**).

### Example 6:

Example of monoester percentage calculation - blending different products

### Example of calculation with Sisterna^{®}

Sisterna's ^{®} Sucrose ester emulsifiers are mixed palmitate (C16) and stearates (C18) esters, and their HLB ratio is tuned by the percentage of monoester in the blend. For example, SP30 contains 30% of monoester and 70% of polyester in weight, and has an HLB of 6. Another product SP50 contains 50% of monoester and 50% of polyester weight, with an HLB of 11. For a 50/50 w/w mix of these two product, the final blend contains (0.5*30%) + (0.5*50%) = 40% of monoester and (0.5*70%) + (0.5*50%) = 60% of polyester. The HLB value of this mix is therefore (0.5*6) + (0.5*11) = 8.5.

In another example, Sisterna's ^{®} Sucrose Ester emulsifier SP30 (30% monoester and 70% polyester, HLB 6) and SP70 (30% monoester and 70% polyester, HLB 15) are mixed at 23/77 w/w SP30/SP70 ratio. The final blend has a weight percentage of (0.23*30%) + (0.77*70%) = 60.8% of monoester and (0.23 *70%) + (0.0.77*30%) = 39.2% of polyester. Thus the HLB value of this mix is (0.23^{∗}6) + (0.77^{∗}15) = 12.93.

### Example of calculation with RYOTO ^{®}

Ryoto ^{®} Sugar ester S-370 consists of 20% of monoester and 80% of polyester in weight and has an HLB of 3. P-1670 consists of 80% of monoester and 20% of polyester in weight and has an HLB of 16. A blend containing 30/70 w/w s-370/S-1670 has (0.3*20%) + (0.7*80%) = 62% of monoester and (0.7*80%) + (0.3*20%) = 38% of polyester in weight and a HLB of (0.3*3) + (0.7*16) = 12.1.

### Example of calculation with CompassFood HABO MX

HABO MX T050 consists of 25% of monoester and 75% of polyester in weight and has an HLB of 5. HABO MX T150 consists of 65% of monoester and 35% of polyester in weight and has an HLB of 15. A blend containing 20/80 w/w MX T050/MX T150 has (0.2*25%) + (0.8*65%) = 57% of monoester and (0.2*75%) + (0.8*35%) = 43% of polyester in weight and a HLB of (0.2*5) + (0.8*15) = 13.

### Example 7:

Perennial ryegrass (*Lolium perenne*), commonly used for lawn, seeds were sown in seed trays and placed in climatic chambers with a 12h 25°C day/12h 23°C night cycle with constant humidity (45%). The plants were watered by adding water from the bottom of the trays. After one week, the plants were sprayed with 5 or 15% (w/w) biostimulant or water (control). This treatment was repeated every week to cover the newly produced leaves. The height of the plants was assessed every week, starting one week after the first treatment. After 5 and 7 weeks, plants were cut before coating application to simulate lawn mowing.

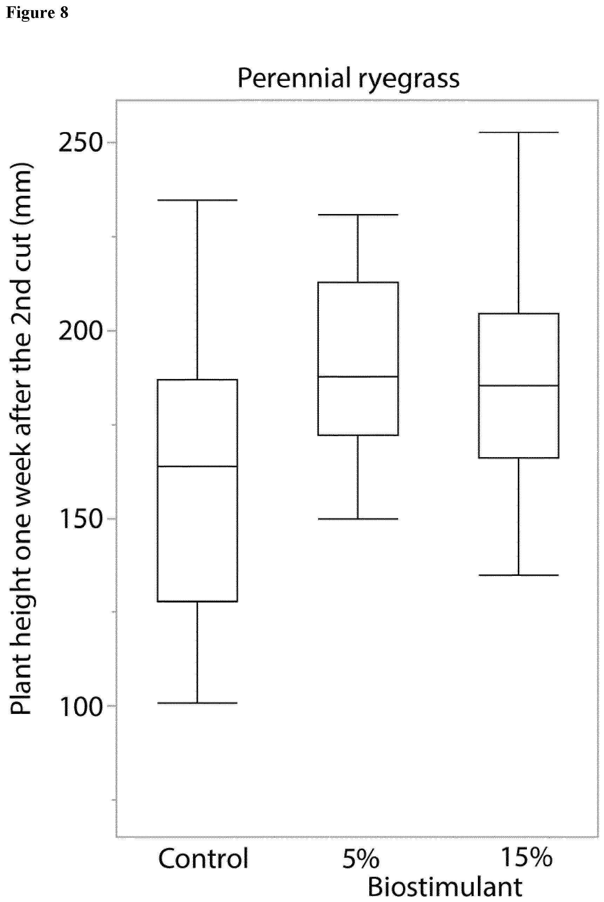

**Conclusion:** Applicants highlighted that perennial ryegrass treated with our biostimulant growth faster than untreated plants one week after the second cut simulating lawn mowing (**Figure 8**).

### Example 8

For this test, a total of 18 banana plants were used, 9 as control and 9 coated with the biostimulan of the invention at 7% diluted. The plants were all similar sizes at the beginning of the experiment, i.e. between 15-20 cm of height and were randomly distributed within treatments. Tests were conducted in a greenhouse under controlled conditions (temperature of 28°C and humidity above 80%). The biostimulant of the invention was applied once on treated plants and the size of the new leaves was measured one week after the application of the biostimulant.

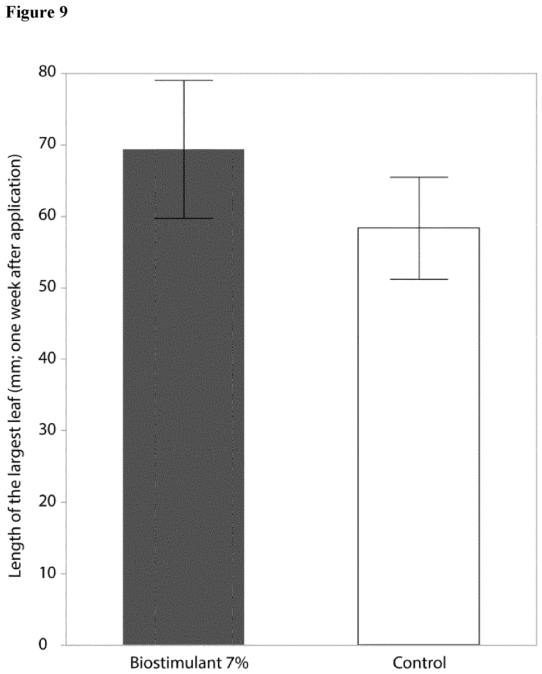

Conclusion: Applicants highlighted that banana trees growth larger leaves when coated with the biostimulant of the invention compared to non-coated trees (**Figure 9**).

### REFERENCES

Schindelin, J.; Arganda-Carreras, I. & Frise, E. et al. (2012) Fiji: an open-source platform for biological-image analysis, Nature methods 9(7): 676-682.

## Claims

1. Use of an edible coating emulsion consisting in the combination of:
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of nonionic sucrose fatty acid ester emulsifiers consisting of sucrose monoester and sucrose polyester, wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water;
as a plant biostimulant for pre-harvest agricultural crops or cultivation plants selected from the list comprising cereals, fruits, vegetables, flowers, trees, grass and seeds.

2. The use of the edible coating emulsion according to claim 1, wherein said plant biostimulant for pre-harvest agricultural crops or cultivation plants promotes: the sexual or non sexual reproduction; an improved stress resistence consisting of a cold stress, a heat stress, a drought stress, a salt stress; the plant growth wherein plant growth comprises increased yield, increased root length, increased leaf area, increased shoot growth, early maturation, and combinations thereof.

3. The use of the edible coating emulsion according to any one of claims 1-2, **characterized in that** said natural vegetable oils are cold pressed oils and correspond to a mixture of two natural vegetable oils selected from the group consisting of canola and sunflower.

4. The use of the edible coating emulsion according to any one of claims 1-3, **characterized in that** the percentage of sucrose monoester versus sucrose polyester is 60% in total weight of said mixture of sucrose fatty acid ester emulsifiers corresponding to a final hydrophilic-lipophilic balance (HLB) of 13.

5. The use of the edible coating emulsion according to any one of claims 1-4, wherein said mixture of nonionic sucrose fatty acid ester emulsifiers represent between 7% w/w and 15% w/w of the total weight of the edible coating emulsion.

6. The use of the edible coating emulsion according to any one of claims 1-5, wherein said mixture of nonionic sucrose fatty acid ester emulsifiers consists of two nonionic sucrose fatty acid ester emulsifiers are mixed palmitates and stearates SP70 and SP30.

7. The use of the edible coating emulsion according to any one of claims 1-3, wherein said mixture of nonionic sucrose fatty acid ester emulsifiers consists of HABO MX T050.

8. The use of the edible coating emulsion according to any one of claims 1-7, wherein said edible coating emulsion is a microemulsion having an average particle size distribution of the oil droplets in the coating emulsion of around 20 micrometer in diameter and preferably between 2 and 5 micrometers.

9. The use of the edible coating emulsion according to any one of claims 1-8, wherein said natural vegetable oils represent between 6% and 12% w/w of the total weight of the edible coating emulsion.

10. The use of the edible coating emulsion according to claim 9, wherein said natural vegetable oils represent 9% of the total weight of the edible coating emulsion.

11. The use of the edible coating emulsion according to any one of claims 1-10, **characterized in that** a natural fungicide is combined to said edible coating emulsion.

12. A method for treatment of pre-harvest cultivation plants and/or plant seeds, comprising the step of applying a biofilm of a plant biostimulant agent consisting in the combination of
natural vegetable oils selected from the group consisting of argan, avocado, canola, safflower, castor, coconut, grape seed, hazelnut, hemp seed, linseed, olive, palm, peanut, pumpkin seed, sesame, sunflower and walnut or mixtures thereof;
a mixture of two nonionic sucrose fatty acid ester emulsifiers consisting of sucrose monoester and sucrose polyester, wherein the percentage of sucrose monoester versus sucrose polyester is comprised between 25 and 70% in weight of each of said nonionic sucrose fatty acid ester emulsifiers corresponding to a final hydrophilic-lipophilic balance (HLB) of the mixture of said nonionic sucrose fatty acid ester emulsifiers which is comprised between 5 and 15;
and water.

13. The method according to claim 12, wherein the treatment comprises contacting at least one part of the pre-harvest cultivation plants and/or the plant seeds with the plant biostimulant agent.

14. The method according to any one of claims 12-13, wherein the pre-harvest cultivation plants and/or plant seed are brought into contact with the plant biostimulant agent for at least 10 hours and/or for at most 14 hours.

15. The method according to any one of claims 12-14, wherein the treatment with the plant biostimulant agent promotes the sexual or non sexual reproduction; an improved stress resistence consisting of a cold stress, a heat stress, a drought stress, a salt stress; the plant growth wherein plant growth can be increased yield, increased root length, increased leaf area, increased shoot growth, early maturation, and combinations thereof, compared to a plant that did not receive the agriculturally effective amount of the plant biostimulant agent.

16. The method according to claim 15, wherein the treatment is performed before a stress event for the pre-harvest cultivation plants and/or plant seed.

17. The method according to claim 16, wherein the stress event is a cold stress, a heat stress, a drought stress and a salt stress.

18. The method according to any one of claims 15-17, wherein the treatment is performed at least 24 hours and at most 48 hours before the stress event.
